# EUROPÄISCHE PATENTSCHRIFT

(11) **EP 0 532 774 B1**
(45) Veröffentlichungstag und Bekanntmachung des Hinweises auf die Patenterteilung: **28.02.1996**
(21) Anmeldenummer: 91115692.5
(22) Anmeldetag: 16.09.1991
(51) Int. Cl.: B25J 15/02, B65G 47/90

(54) **Greifer für einen Manipulator**
Manipulator gripper
Pince pour manipulateur

(43) Veröffentlichungstag der Anmeldung: 24.03.1993
(73) Patentinhaber: SIG - Schweizerische Industrie-Gesellschaft, CH-8212 Neuhausen am Rheinfall (CH)
(72) Erfinder: Breu, Gerhard, CH-8371 Oberwangen (CH); Spycher, Peter, CH-8045 Zürich (CH)
(74) Vertreter: Frei, Alexandra Sarah

(56) Entgegenhaltungen:
- EP-A- 0 290 218
- WO-A-91/11378
- US-A- 3 923 191
- SOVIET PATENTS ABSTRACTS Section PQ, Week 8804, 28. Januar 1988 Derwent Publications Ltd, London, GB, Class P62, AN 88-027375/04 & SU-A-1 316 817 (LENGD KALININ POLY) 15 Juni 1987
- SOVIET PATENTS ABSTRACTS Section PQ, Week 8737, 23. September 1987 Derwent Publications Ltd., London, GB; Class P62, AN 87-263106/37 & SU-A-1 288 053 (MARIISK POLY) 7 Februar 1987

## Beschreibung

Die Erfindung betrifft einen Greifer für einen Manipulator mit einem Antrieb mit mehreren Greifarmen zur Erfassung von Gegenständen.

Ein solcher Greifer ist beispielsweise aus der Europäischen Patentanmeldung Nr.0 368 777 bekannt. Dieser Greifer hat einen pneumatischen Antrieb mit dem die Greifarme bewegt werden können. Der pneumatische Antrieb besteht dabei aus einem Gestänge, einem Pneumatikzylinder und einer daran über Ventile angeschlossenen Druckluftquelle.

Der Nachteil eines solchen Greifers besteht darin, dass er aus vielen Einzelteilen besteht, die miteinander zusammenwirken. Damit ist der Greifer schwer, teuer und benötigt aufwendige Wartung, denn es muss ständig für genügende Schmierung der Gelenke und für die Reinhaltung wichtiger Zwischenräume gesorgt sein.

Die Erfindung, wie sie durch die Patentansprüche gekennzeichnet ist, löst die Aufgabe, einen Greifer zu schaffen, der einfach im Aufbau und wartungsfrei ist.

Die durch die Erfindung erreichten Vorteile sind darin zu sehen, dass ein solcher Greifer billig in der Herstellung und wartungsfrei ist. Durch den äusserst einfachen Aufbau ist er auch leicht auswechselbar. Beispielsweise kann er statt eines Sauggreifers an einem Roboterarm angebracht werden, denn er kann mit dem gleichen Antrieb arbeiten. Da er nur ein bewegliches Teil und die Greifarme keine Gelenke aufweisen, eignet er sich speziell auch zur Verwendung in Reinräumen. Der wesentliche Teil eines solche Greifers kann auch leicht gereinigt oder gar sterilisiert werden und damit in der Lebensmittelindustrie oder bei der Herstellung von elektronischen Bauelementen wie integrierten Schaltkreisen verwendet werden.

Im folgenden wird die Erfindung anhand von lediglich einen Ausführungsweg darstellenden Zeichnungen erläutert. Es zeigt:
- Figur 1: einen Schnitt durch einen Greifer in einer ersten Stellung,
- Figur 2: einen Schnitt durch den Greifer gemäss Figur 1 in einer zweiten Stellung,
- Figur 3: eine weitere Ausführung eines Teils des Greifers,
- Figur 4: eine Aufsicht des Teils gemäss Figur 3 und
- Figur 5: eine weitere Ausführung des Greifers.

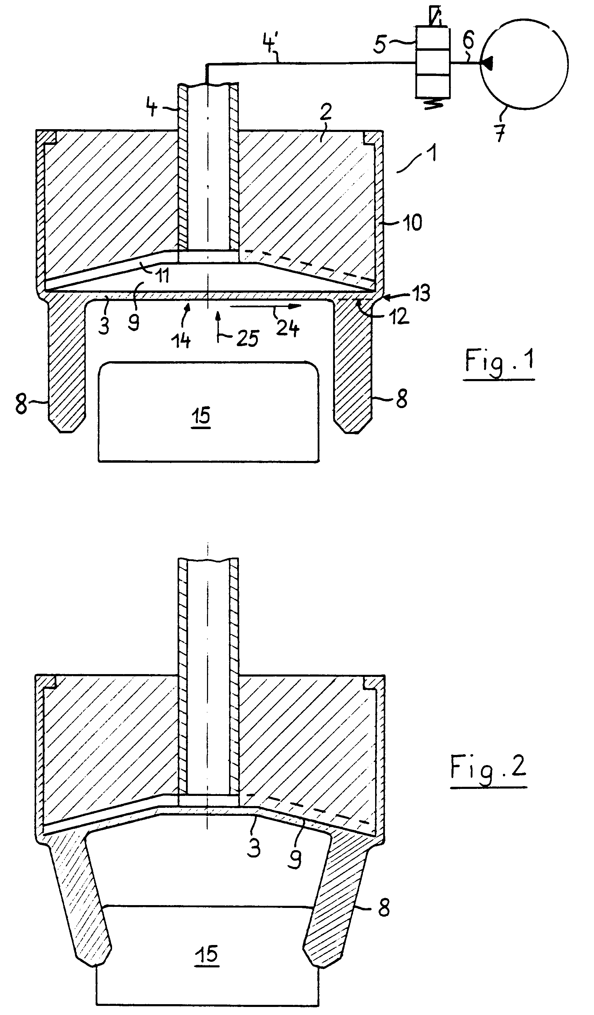

Figur 1 zeigt einen Greifer 1 im Schnitt, der aus einem Lagerelement 2 und einer Membrane 3 sowie einem Antriebselement 4 besteht, das hier als Rohr ausgebildet ist, das in an sich bekannter und deshalb hier nicht näher dargestellter Weise an eine an sich bekannte Vakuumpumpe angeschlossen ist. Trotzdem ist ein weiterer, nun schematisch angedeuteter Abschnitt 4' des Rohres 4 gezeigt, der an ein Steuerventil 5 angeschlossen ist. Das Steuerventil 5 ist über eine Leitung 6 an eine Pumpe 7 für ein Fluid, beispielsweise eine Vakuumpumpe, angeschlossen. Das Antriebselement 4 mit dem Abschnitt 4', dem Steuerventil 5, der Leitung 6 und der Pumpe 7 bildet den Antrieb für die Membrane 3. Der Greifer 1 weist Greifarme 8 auf, die mit der Membrane 3 fest verbunden sind. Das Lagerelement 2 bildet mit der Membrane 3 einen Zwischenraum 9, der an das Antriebselement 4, d.h. die Rohrleitung und damit an den Antrieb angeschlossen ist. Die hier kreisförmige Membrane 3 ist mit einer Befestigungswand 10 einstückig verbunden, die das zylindrische Lagerelement 2 seitlich umschliesst. Damit ist auch der Zwischenraum 9 gegen aussen abgedichtet. Das Lagerelement 2 weist auch radial verlaufende Kanäle 11 auf, die die Bewegungen des Fluids erleichtern, wie später noch zu sehen ist. Man unterscheidet hier einen ersten Bereich 12 der Membran 3 wo die Greifarme 8 befestigt sind, einen zweiten Bereich 13 wo die Membrane 3 am Lagerelement befestigt ist und einen dritten Bereich 14, der zwischen den Greifarmen 8 liegt. Vor dem dritten Bereich 14 können Gegenstände 15 durch die Greifarme 8 seitlich erfasst werden. Die hier gezeigte Anordnung ist speziell als Teil eines Manipulators, wie beispielsweise eines Industrieroboters gedacht und wird demnach sinnvoll in diesen integriert, indem beispielsweise der Greifer 1 an einem beweglichen Arm angeordnet ist, während das Steuerventil 5 und die Pumpe 7 oder eben der Antrieb ortsfest sind.

Figur 2 zeigt die Greifarme 8 in einer Stellung, in der der Gegenstand 15 erfasst ist. Dies wird erreicht indem das Fluid aus dem Zwischenraum 9 abgesaugt wird. So legt sich der dritte Bereich 14 der Membrane 3 an das Lagerelement 2 an, verformt sich, in diesem Beispiel einer kreisförmigen Membrane 3, konisch, wodurch die Greifarme 8 gegeneinander geneigt werden. Wenn die Membrane 3 am Lagerelement 2 anliegt, erlauben nur noch die Kanäle 11 das Fliessen des Fluids.

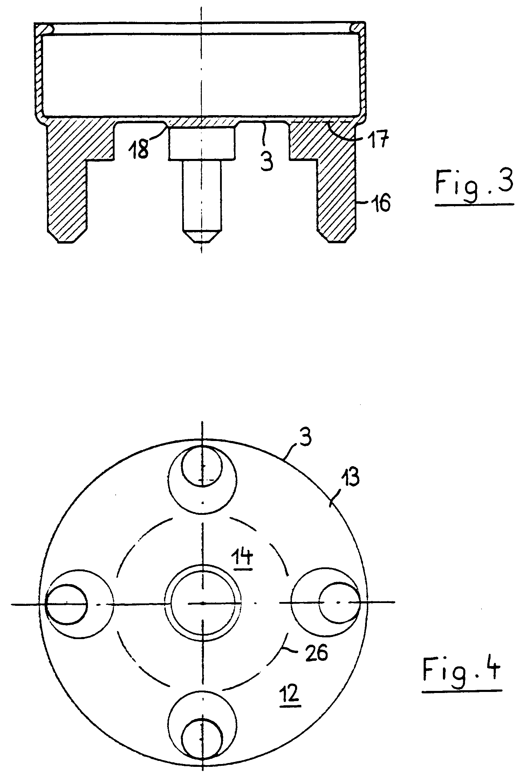

Figur 3 zeigt eine Membrane 3 mit Greifarmen 16, die sich über eine verbreiterte Grundfläche 17 auf der Membrane 3 abstützen. Damit können die Greifarme 16 grössere Kräfte gegeneinander ausüben. Man erkennt auch eine Verstärkung 18 der Membrane 3 in deren dritten Bereich 14.

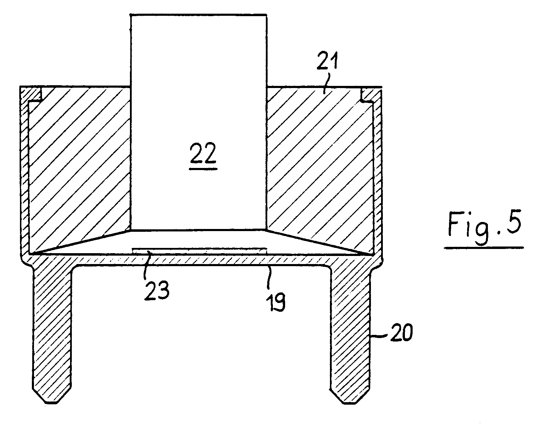

Figur 4 zeigt die Membrane 3 aus Figur 3 in Aufsicht. Dabei erkennt man den ersten Bereich 12, der sich etwa ringförmig um den zentralen und kreisförmigen dritten Bereich 14 erstreckt. Der dritte Bereich 14 wird durch die unterbrochene Linie 26 gegen den ersten Bereich 12 abgegrenzt. Nach aussen wird der erste Bereich 12 durch den zweiten Bereich 13 abgegrenzt.

Figur 5 zeigt eine weitere Ausführungsform des Greifers mit der nun bekannten Membrane 19, den Greifarmen 20 und dem Lagerelement 21. Als Antrieb für die Membrane 19 ist hier ein Elektromagnet 22 vorgesehen, dessen Wirkung in bekannter und deshalb hier nicht näher darestellter Weise ein- und ausschaltbar ist. Dazu ist auf der Membrane 19 ein Metallteil 23 vorgesehen. Durch das Ein- oder Ausschalten des Elektromagneten, wird das Metallteil 23 und damit die Membrane 19 an den Elektromagneten 22 herange-zogen, oder die federelastischen Rückstellkräfte, die die Membrane 19 ausübt lassen sie in die gezeigte Stellung zurückkehren. So werden die Greifarme 20 bewegt.

Aus diesen Figuren geht hervor, dass die Membrane 3, 19 ihre grösste Ausdehnung in einer hier durch einen Pfeil 24 angedeuteten Richtung aufweist. Durch die beschriebene Art der Lagerung und dank ihrer eigenen Elastizität, die eine Voraussetzung für die gewünschte Wirkungsweise ist, kann der dritte Bereich 14 in einer Richtung bewegt werden, die quer oder im wesentlichen etwa senkrecht zur Richtung 24 verläuft, wie das ein Pfeil 25 (Fig. 1) andeutet. Dadurch verformt sich der erste Bereich 12, bei kreisförmigem dritten Bereich 14, konisch.

Als Antriebe für die Membrane sind wie bereits erwähnt pneumatische und elektromagnetische Antriebe aber auch andere Antriebsarten möglich.

## Patentansprüche

1. Greifer (1) für einen Manipulator mit einem Antrieb und mit mehreren Greifarmen (8) zur Erfassung von Gegenständen (15), dadurch gekennzeichnet, dass die Greifarme in einem ersten Bereich (12) auf einer elastischen Membrane (3) angeordnet und mit der Membrane fest verbunden sind, dass die Membrane einen zweiten Bereich (13) aufweist, wo sie auf einem Lagerelement (2) aufliegt und an welchem sie auch befestigt ist, dass die Membrane einen zentralen dritten Bereich (14) aufweist, in dem sie in einer Bewegungsrichtung (25) bewegbar ist, die im wesentlichen senkrecht zu den Richtungen (24) ihrer grössten Ausdehnung verläuft und dass das Lagerelement (2) auf der Antriebsseite der Membrane, und somit den Greifarmen gegenüberliegend, angeordnet ist und dass ein zentraler Antrieb (4, 4', 5, 6, 7) für den zentralen drittten Bereich vorgesehen ist, zum Bewegen des dritten Bereiches der Membrane in der Bewegungsrichtung (25), so dass die Neigung des ersten Bereiches (12) und damit auch die Neigung der Greifarme gegeneinander verändert wird.

2. Greifer nach Anspruch 1, dadurch gekennzeichnet, dass der erste Bereich (12) mit den Greifarmen zwischen dem zweiten Bereich (13) und dem zentralen dritten Bereich (14) liegt.

3. Greifer nach Anspruch 1, dadurch gekennzeichnet, dass der zentrale dritte Bereich eine Verstärkung (18) und/oder die Greifarme (16) eine verbreiterte Grundfläche (17) aufweisen.

4. Greifer nach Anspruch 1, dadurch gekennzeichnet, dass die Bereiche (12,13,14) kreisförmig angeordnet sind.

5. Greifer nach Anspruch 1, dadurch gekennzeichnet, dass der erste Bereich (12) konisch verformbar ist.

6. Greifer nach Anspruch 1, dadurch gekennzeichnet, dass als Antrieb für den dritten Bereich ein Fluid vorgesehen ist, das durch eine Pumpe (7) bewegt wird.

7. Greifer nach Anspruch 1, dadurch gekennzeichnet, dass als Antrieb für den dritten Bereich ein Elektromagnet (22) vorgesehen ist.

8. Greifer nach Anspruch 1, dadurch gekennzeichnet, dass die Membrane auf einem Lagerelement (2) beweglich aufsespannt ist.

9. Greifer nach Anspruch 6, dadurch gekennzeichnet, dass als Fluid Luft vorgesehen ist und dass die Pumpe (7) als Vakuumpumpe ausgebildet ist.

10. Greifer nach Anspruch 1, dadurch gekennzeichnet, dass die Membrane (3) aus Kunststoff besteht.

## Claims

1. Gripper (1) for a manipulator having a drive and several gripper arms (8) for gripping articles (15), characterized in that the gripper arms are arranged in a first area (12) on an elastic membrane (3) and are firmly connected to said membrane, that the membrane has a second area (13), where it rests on a bearing element (2) and to which it is also fixed, that the membrane has a central, third area (14) in which it is movable in a movement direction (25), which is substantially perpendicular to the directions (24) of its greatest extension and that the bearing element (2) is located on the drive side of the membrane and therefore facing the gripper arms, and that a central drive (4, 4', 5, 6, 7) is provided for the central, third area for moving said third membrane area in the movement direction (25), so that the inclination of the first area (12) and therefore also the inclination of the gripper arms with respect to one another is changed.

2. Gripper according to claim 1, characterized in that the first area (12) with the gripper arms is located between the second area (13) and the central, third area (14).

3. Gripper according to claim 1, characterized in that the central, third area has a reinforcement (18) and/or the gripper arms (16) have a widened base surface (17).

4. Gripper according to claim 1, characterized in that the areas (12, 13, 14) are arranged in circular manner.

5. Gripper according to claim 1, characterized in that the first area (12) is conically deformable.

6. Gripper according to claim 1, characterized in that a fluid, moved by a pump (7), is provided as a drive for the third area.

7. Gripper according to claim 1, characterized in that an electromagnet (22) is provided as a drive for the third area.

8. Gripper according to claim 1, characterized in that the membrane is movably clamped on a bearing element (2).

9. Gripper according to claim 6, characterized in that the fluid is air and that the pump is a vacuum pump.

10. Gripper according to claim 1, characterized in that the membrane (3) is made from plastic.

## Revendications

1. Pince (1) pour un manipulateur munie d'un entraînement et de plusieurs bras-robots (8) pour saisir des objets (15), caractérisée en ce que les bras-robots sont disposés dans une première zone (12) sur une membrane élastique (3) et sont reliés de façon fixe à la membrane, en ce que la membrane présente une deuxième zone (13) où elle repose sur un élément support (2) et auquel elle est également fixée, en ce que la membrane présente une troisième zone centrale (14) où elle est mobile dans un sens de déplacement (25) qui est sensiblement perpendiculaire aux directions (24) de sa plus grande dimension, en ce que l'élément support (2) est disposé sur le côté entraînement de la membrane, et donc en face des bras-robots, et en ce qu'un entraînement central (4, 4', 5, 6, 7) pour la troisième zone centrale, est prévu pour le déplacement de la troisième zone de la membrane dans le sens de déplacement (25), de sorte que l'inclinaison de la première zone (12) et donc également l'inclinaison des bras-robots sont modifiées l'une par rapport à l'autre.

2. Pince selon la revendication 1, caractérisée en ce que la première zone (12) avec les bras-robots se situe entre la deuxième zone (13) et la troisième zone centrale (14).

3. Pince selon la revendication 1, caractérisée en ce que la troisième zone centrale présente un renfort (18) et/ou les bras-robots (16) présentent une surface de base élargie (17).

4. Pince selon la revendication 1, caractérisée en ce que les zones (12,13,14) sont disposées de façon circulaire.

5. Pince selon la revendication 1, caractérisée en ce que la première zone (12) peut être déformée en forme de cône.

6. Pince selon la revendication 1, caractérisée en ce que, en guise d'entraînement pour la troisième zone, il est prévu un fluide qui est mis en mouvement par une pompe (7).

7. Pince selon la revendication 1, caractérisée en ce qu'il est prévu un électro-aimant (22) comme entraînement pour la troisième zone.

8. Pince selon la revendication 1, caractérisée en ce que la membrane est fixée de façon mobile sur un élément support (2).

9. Pince selon la revendication 6, caractérisée en ce que de l'air est prévu comme fluide et en ce que la pompe (7) se présente sous la forme d'une pompe à vide.

10. Pince selon la revendication 1, caractérisée en ce que la membrane (3) est en matière plastique.
